# FASCICULE DE BREVET EUROPEEN

(11) **EP 1 999 020 B1**
(45) Date de publication et mention de la délivrance du brevet: **09.10.2013**
(21) Numéro de dépôt: 07731110.8
(22) Date de dépôt: 08.03.2007
(51) Int. Cl.: B64D 15/12, B64D 33/02, F02C 7/047

(54) **STRUCTURE POUR LEVRE D'ENTREE D'AIR DE NACELLE A DEGIVRAGE ELECTRIQUE COMPRENANT UNE ZONE D'ATTENUATION ACOUSTIQUE**
LUFTEINLASSSTRUKTUR FÜR EINE TRIEBWERKSGONDEL MIT ELEKTRISCHER ENTEISUNG UND EINEM BEREICH ZUR AKUSTISCHEN DÄMPFUNG
STRUCTURE FOR AN AIR INLET LIP FOR A NACELLE WITH ELECTRIC DE-ICING AND COMPRISING AN ACOUSTIC ATTENUATION ZONE

(30) Priorité: 24.03.2006 FR 0602547
(43) Date de publication de la demande: 10.12.2008
(73) Titulaire: Aircelle, 76700 Gonfreville L'Orcher (FR)
(72) Inventeur: VAUCHEL, Guy, Bernard, F-76610 Le Havre (FR)
(74) Mandataire: Jouanneau, Lionel
(86) Numéro de dépôt international: PCT/FR2007/000413
(87) Numéro de publication internationale: WO 2007/110494

(56) Documents cités:
- EP-A2- 1 495 963
- WO-A-2005/087589
- GB-A- 885 131
- GB-A- 1 011 436
- GB-A- 1 117 843

## Description

La présente invention se rapporte à une structure pour une lèvre d'une entrée d'air d'une nacelle de turboréacteur comprenant une peau externe, destinée à être orientée vers l'extérieur de la lèvre, et une peau interne, destinée à être orientée vers l'intérieur de la lèvre.

Un avion est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section amont de la nacelle.

En vol, selon les conditions de température et d'humidité; de la glace peut se former sur la nacelle au niveau de la lèvre d'entrée d'air. La présence de glace ou de givre modifie les propriétés aérodynamiques de l'entrée d'air et perturbe l'acheminement de l'air vers la soufflante. En outre, des morceaux de glace peuvent éventuellement se détacher de la lèvre d'entrée d'air et entrer en collision avec des composants du turboréacteur tels que les aubes de la soufflante.

Il convient donc de rechercher des solutions permettant d'empêcher la formation de glace sur la lèvre d'entrée d'air.

Une première solution consiste à prélever de l'air chaud au niveau du compresseur du turboréacteur et à l'amener au niveau de la lèvre d'entrée d'air dont il réchauffe les parois. Toutefois, un tel dispositif nécessite un système de conduites d'amenée d'air chaud entre le turboréacteur et l'entrée d'air, ainsi qu'un système d'évacuation de l'air chaud au niveau de la lèvre d'entrée d'air. Ceci augmente la masse de l'ensemble propulsif, ce qui n'est pas souhaité.

Une deuxième solution, décrite dans le brevet EP 1 495 963 consiste à appliquer une résistance chauffante sur une paroi extérieure de la lèvre d'entrée d'air. Cette technologie oblige à rajouter une protection anti-érosion par-dessus la résistance chauffante de dégivrage.

Une telle solution présente plusieurs inconvénients. Tout d'abord, le produit anti-érosion n'est pas en adéquation avec la qualité de surface demandée pour la paroi externe de la lèvre. Ensuite, en cas de recouvrement partiel de la lèvre d'entrée d'air, celle-ci présente une discontinuité qui est néfaste à la ligne aérodynamique de l'entrée d'air. Enfin, un tel système contribue à augmenter l'épaisseur totale de la lèvre, ce qui peut entraîner une dégradation des performances d'atténuation acoustique, celles-ci étant très liées à l'épaisseur de la lèvre d'entrée d'air.

Toutefois un tel système permet de réaliser une économie de masse par rapport à un système utilisant de l'air chaud prélevé sur le turboréacteur.

Pour pallier ces inconvénients une solution connue et décrite par le document WO 2005/087589 prévoit une structure pour une lèvre d'une entrée d'air d'une nacelle de turboréacteur comprenant une peau externe, destinée à être orientée vers l'extérieur de la lèvre, une peau interne, destinée à être orientée vers l'intérieur de la lèvre, et au moins un élément électrique chauffant apte à être relié à des moyens d'alimentation électrique, ledit élément électrique chauffant étant situé entre la peau interne et la peau externe.

Toutefois, une telle solution ne tient pas compte de la possible présence sur la structure d'entrée d'air d'une zone d'atténuation acoustique associée à une structure d'atténuation acoustique.

La présente invention a pour but de pallier l'inconvénient précédemment évoqué et consiste pour cela en une structure pour une lèvre d'une entrée d'air d'une nacelle de turboréacteur comprenant une peau externe, destinée à être orientée vers l'extérieur de la lèvre, une peau interne, destinée à être orientée vers l'intérieur de la lèvre, et au moins un élément électrique chauffant situé entre la peau interne et la peau externe et apte à être relié à des moyens d'alimentation électrique, caractérisé en ce que le au moins un élément électrique chauffant s'étend au moins en partie à travers une zone d'atténuation acoustique présentant des perforations traversant la structure et associées à une structure d'atténuation acoustique rapportée sur la peau interne.

Ainsi, en prévoyant un perçage à travers toute l'épaisseur de la structure d'entrée d'air comprenant le système de dégivrage, la zone d'atténuation acoustique présente un perçage homogène en adéquation avec la structure d'atténuation acoustique associée. En effet, contrairement à l'art antérieur dans lequel un élément électrique chauffant perforé peut être utilisé (grillage, tissus chauffant) et dans lequel ces perforations propres de l'élément électrique chauffant ne sont en adéquation ni avec les fréquences sonores à absorber ni avec la structure d'atténuation acoustique correspondante ; l'élément électrique chauffant est ici perforé avec la structure d'entrée d'air, ce qui permet d'obtenir ce perçage adéquat homogène sur toute l'épaisseur de la zone d'atténuation acoustique.

On notera que dans ce cas d'une lèvre d'entrée d'air équipée d'une structure d'atténuation acoustique interne, la paroi de la lèvre d'entrée d'air présente, au niveau de la structure d'atténuation acoustique, une multitude de perforations acoustiques. Grâce à l'invention les bords des trous acoustiques sont pratiqués dans la peau externe rigide et traverse la paroi au lieu d'être pratiqués, comme dans l'art antérieur, dans l'élément électrique chauffant. avant de traverser la paroi. De cette manière on conserve une bonne qualité de bord acoustique tandis que la présence d'un élément électrique chauffant externe, généralement de faible dureté, conduirait à une qualité de bord acoustique médiocre.

Outre cette amélioration au niveau des performances acoustiques, il convient de noter que la solution proposée permet également de conserver les avantages d'une structure d'entrée d'air intégrant un élément électrique chauffant dans la structure même de la lèvre d'entrée d'air de la nacelle selon lesquels il n'est pas nécessaire d'appliquer une couche de protection supplémentaire et la peau externe de la structure définit toujours les propriétés aérodynamiques de l'entrée d'air. Par conséquent, la lèvre d'entrée d'air peut n'être équipée que partiellement d'un ou plusieurs éléments électriques chauffants sans créer de discontinuité sur la surface extérieure de la lèvre d'entrée d'air.

Avantageusement, la structure comprend au moins une couche de protection englobant l'élément électrique chauffant.

De manière préférentielle, au moins une couche de protection est une couche d'une résine.

De manière alternative ou complémentaire, au moins une couche de protection est un pli de verre.

En variante, la structure comprend au moins deux couches d'au moins un élément électrique chauffant, éventuellement séparées par au moins une couche métallique ou organique.

Avantageusement, la structure comprend un feuillard réflectorisant disposé après l'élément électrique chauffant et avant la peau interne. La présence de ce feuillard permet de réduire les déperditions calorifiques du côté de la peau interne et de concentrer la fonction anti-givrage vers la peau externe. Ceci permet d'optimiser la consommation électrique.

Préférentiellement la peau externe possède une épaisseur inférieure à 1 mm. Ceci permet d'optimiser la transmission de chaleur à travers la peau externe.

De manière avantageuse, l'élément électrique chauffant se présente sous la forme d'une bande métallique formant une résistance chauffante.

En variante l'élément électrique chauffant se présente sous la forme d'un tissu, notamment organique ou métallique, formant une résistance chauffante.

Préférentiellement, l'élément électrique chauffant se présente sous la forme d'un serpentin.

La présente invention se rapporte également à une lèvre d'une entrée d'air pour nacelle de turboréacteur réalisée à partir d'une ou plusieurs structures telles que décrites précédemment.

La présente invention se rapporte encore à une nacelle de turboréacteur comprenant une entrée d'air, caractérisée en ce que l'entrée d'air est équipée d'une lèvre selon l'invention.

La mise en oeuvre de l'invention sera mieux comprise à l'aide de la description détaillée qui est exposée ci-dessous en regard du dessin annexé dans lequel :
La figure 1 est une représentation schématique en perspective d'une nacelle.
La figure 2 est une représentation partielle agrandie d'une lèvre d'entrée d'air réalisée à partir de structures selon l'invention.
La figure 3 est une représentation en coupe transversale d'une structure selon l'invention.
La figure 4 est une vue agrandie en coupe de la structure selon l'invention.
La figure 5 est une vue partielle de l'élément chauffant au niveau de la structure d'atténuation acoustique.
La figure 6 est une vue schématique d'une variante d'une partie d'élément chauffant.
Les figures 7 à 10 représentent différentes variantes de réalisation du ou des éléments électriques chauffants.

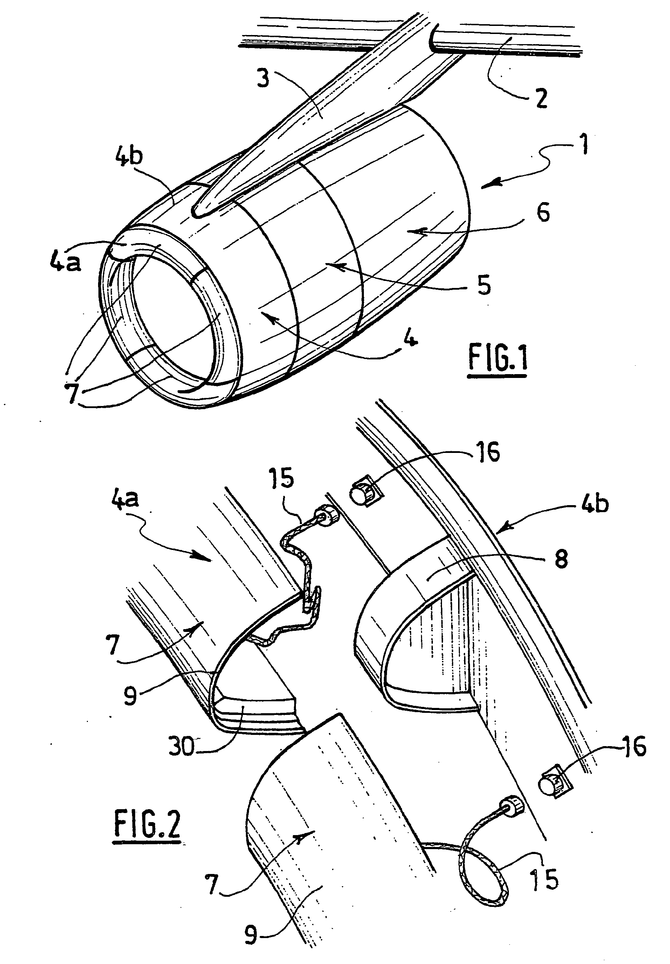

Une nacelle 1 selon l'invention telle que représentée sur la figure 1 constitue un logement tubulaire pour un turboréacteur (non visible) dont elle sert à canaliser les flux d'air qu'il génère. La nacelle 1 est située sous une aile 2 à laquelle elle est rattachée par un mât 3. Elle abrite également différents composants nécessaires au fonctionnement du turboréacteur.

Plus précisément, la nacelle 1 possède une structure comprenant une section avant formant une entrée d'air 4, une section médiane 5 entourant une soufflante (non visible) du turboréacteur, et une section arrière 6 entourant le turboréacteur et abritant un système d'inversion de poussée (non visible).

L'entrée d'air 4 se divise en deux parties, à savoir d'une part, une lèvre 4a d'entrée adaptée pour permettre la captation optimale vers le turboréacteur de l'air nécessaire à l'alimentation de la soufflante et des compresseurs internes du turboréacteur, et d'autre part, une structure aval 4b sur laquelle est rapportée la lèvre 4a et destinée à canaliser convenablement l'air vers les aubes de la soufflante. L'ensemble est rattaché en amont d'un carter de la soufflante appartenant à la section médiane 5 de la nacelle.

La lèvre 4a d'entrée d'air est réalisée à l'aide de structures 7 selon l'invention rapportées sur la structure aval 4b sur toute la périphérie de la nacelle 1. Chaque structure 7 est séparée de la structure voisine par un élément de séparation 8 solidaire de la structure aval 4b.

La lèvre 4a d'entrée d'air est ici réalisée à partir de quatre structures 7. Elle pourrait bien évidemment être réalisée à l'aide de deux structures 7, en une seule pièce ou encore à partir de plus de quatre structures

Chaque structure 7 comprend une paroi 9 mise en forme de nanière à donner à la lèvre 4a le profil souhaité ainsi qu'une structure d'atténuation acoustique 30 interne, du type nid d'abeille, celle-ci étant située au contact d'une zone de la paroi 10 donnant sur l'entrant de la soufflante et pourvue d'une multitude de perforations 11 régulièrement espacées.

La paroi 10 de la structure 7 comporte une peau externe 12 destinée à être orientée vers l'extérieur de la lèvre, une peau interne 13 destinée à être orientée vers l'intérieur de la lèvre et un élément électrique chauffant 14 situé entre la peau interne 13 et la peau externe 12. L'élément électrique chauffant 14 est relié à une sortie d'alimentation électrique elle-même reliée à un câble électrique 15 destiné à être branché sur une prise d'alimentation 16 de la structure aval.

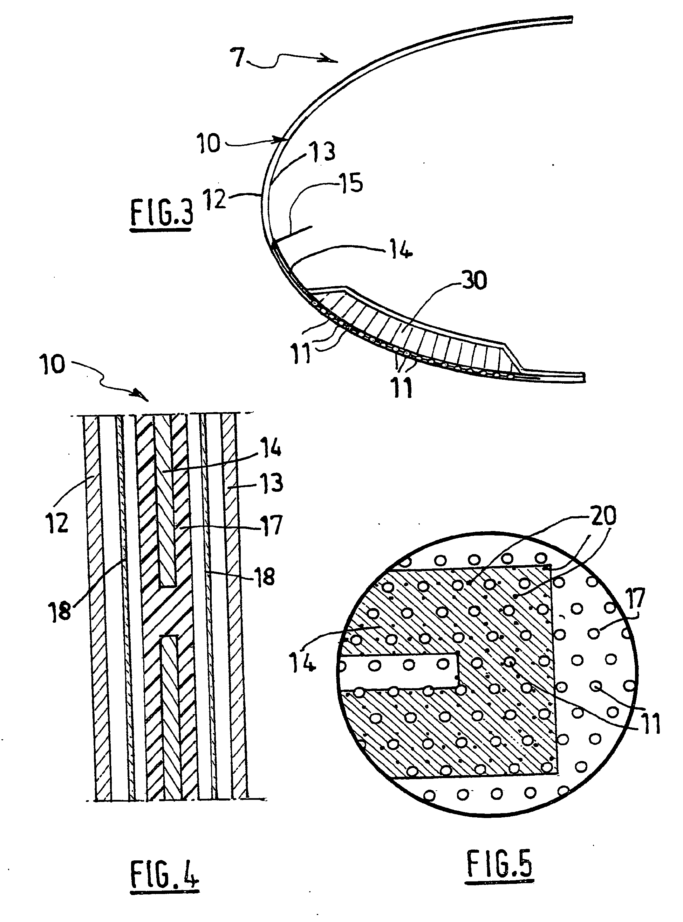

La paroi 10 peut n'être équipée que partiellement d'un élément électrique chauffant 14, selon les zones qui doivent être dégivrées. Ainsi comme représenté sur la figure 3, la paroi 10 n'est équipée d'un élément électrique chauffant qu'au niveau de la structure d'atténuation acoustique 30 dans la zone de la paroi 10 donnant sur l'entrant de la soufflante. On veillera à ce que l'élément électrique chauffant 14 ne s'étende pas jusqu'au niveau de la fixation entre la structure 7 et la structure aval 4b et reste dégagé des moyens de fixations entre la structure 7 et la structure aval 4b. En effet, la fixation de la structure 7 sur la structure aval 4b s'effectue généralement au moyen de rivets (non visibles) qui ne doivent pas entrer en contact avec l'élément électrique chauffant 14.

L'élément électrique chauffant 14 est englobé dans une couche de protection telle qu'une résine 17, elle-même encadrée de plis de verre 18 de part et d'autre de l'élément électrique chauffant 14.

La peau externe 12 assure la ligne extérieure aérodynamique de la lèvre 4a. Elle peut être métallique ou réalisée en matière composite, être préformée ou réalisée en même temps que la mise en place de l'élément électrique chauffant 14. La peau externe 12 possède une épaisseur relativement faible de manière à assurer une bonne transmission de la chaleur vers l'extérieur de la lèvre. Par exemple, cette épaisseur sera de quelques dixièmes de millimètre.

La peau interne 13 vient recouvrir l'élément électrique chauffant 14 et finaliser la paroi 10. Comme pour la peau externe 12, elle peut être métallique ou réalisée en matière composite, être préformée ou réalisée en même temps que la mise en place de l'élément électrique chauffant 14. Il convient de noter que les épaisseurs de la peau interne 12 et de la peau externe 13 peuvent ne pas être identiques.

En complément, il est possible d'associer à la peau interne 12 un feuillard réflectorisant (non représenté) situé entre l'élément chauffant 14 et la peau interne 13 et destiné à réduire la perte calorifique du côté de la peau interne 13 afin de concentrer la diffusion de chaleur vers la peau externe 12. Ceci permet de réduire la consommation électrique de la structure 7 pour obtenir le dégivrage souhaité.

Les différentes couches constituant la paroi 10 de la structure 7 sont liées entre elles par une matière de liaison, de type colle ou résine (non représentée).

L'élément électrique chauffant 14 est du type résistance métallique découpée, tissu organique ou métallique résistif, ou encore feuille organique résistive. Une forme particulièrement avantageuse de l'élément électrique chauffant 14 est une forme en serpentin. Bien évidemment, il convient de s'assurer que la surface de l'élément électrique chauffant 14 permettre d'atteindre la température de dégivrage souhaitée.

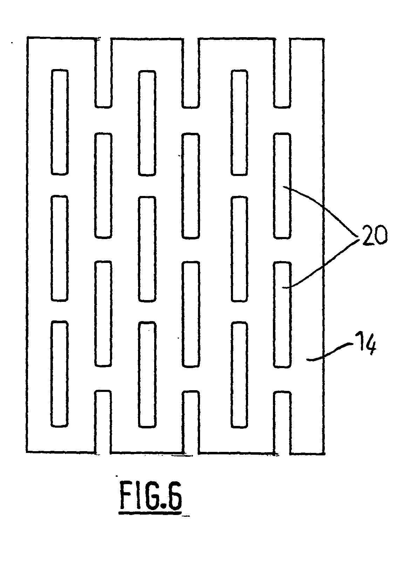

La forme en serpentin de l'élément électrique chauffant 14 permet d'augmenter la liaison entre les différentes couches. Cette liaison peut encore être améliorée en pratiquant dans l'élément électrique chauffant 14 des opercules 20, voire des fentes comme représentées sur la figure 6, permettant la pénétration de la matière de liaison dans les opercules de manière à assurer un plus grand interfaçage entre les différentes couches. Il convient de noter que si l'élément électrique chauffant 14 est fourni avec sa couche 17 de protection résine, c'est l'ensemble qui devra présenter lesdits opercules 20.

Le même principe de perforations 20 destinées à améliorer la cohésion des couches entre elles peut s'appliquer au feuillard reflectorisant.

La figure 4 illustre la succession des différentes couches formant la paroi de la structure.

Au niveau de la structure d'atténuation acoustique interne 30, la paroi 10 est perforée sur toute son épaisseur. La figure 5 montre un détail d'un élément électrique chauffant 14 situé dans cette zone.

Il convient de noter que l'épaisseur de la paroi 10 perforée au niveau de la structure d'atténuation acoustique 30 est importante pour les performances acoustiques et ne doit généralement pas dépasser une certaine épaisseur. La présence de l'élément chauffant 14 augmente légèrement cette épaisseur. Toutefois, la structure d'atténuation acoustique 30 étant située dans le sens de l'entrée d'air, la paroi 10 est, à cet endroit, moins sensible aux impacts. Il est donc possible de diminuer l'épaisseur de la couche externe 12 dans cette zone pour compenser l'augmentation due à la présence de l'élément chauffant 14.

Comme indiqué précédemment, l'alimentation de l'élément électrique chauffant 14 s'effectue par une sortie d'alimentation reliée par un câble 15 à une source électrique. Cette sortie d'alimentation traverse la peau interne 13 de la structure 7 à proximité du centre de cette dernière pour être ensuite branchée sur le câble 15 destiné à être relié à la source électrique de la structure aval 4b de l'entrée d'air 4. On veillera à protéger cette sortie d'alimentation lors de la fabrication de la paroi 10 et notamment lors de la polymérisation de la peau interne 13 et de la peau externe 12 ainsi que des résines dans le cas de peaux organiques en matériau composite.

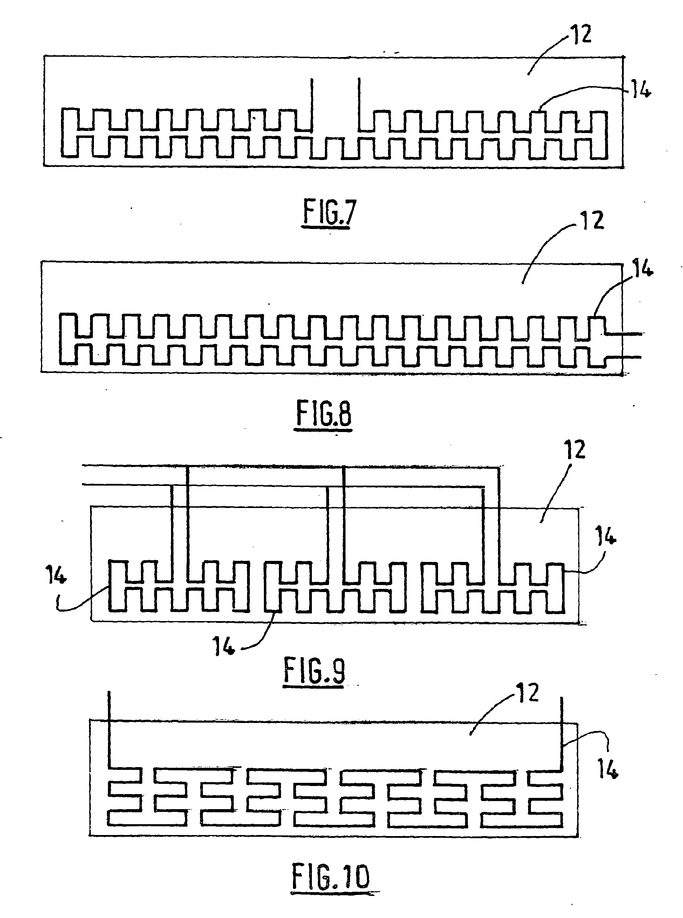

Les figures 7 à 10 montrent diverses configurations pour l'élément électrique chauffant 14. On pourra notamment noter que la figure 9 comprend plusieurs éléments électriques chauffants 14 montés en parallèle. Ainsi en cas de défaillance d'un élément électrique chauffant 14, les autres éléments électriques chauffant 14 peuvent continuer à remplir leur fonction de dégivrage.

On pourra également avoir plusieurs couches d'éléments électriques chauffants 14 agencés selon , des configurations éventuellement différentes.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Structure (7) pour une lèvre (4a) d'une entrée d'air (4) d'une nacelle (1) de turboréacteur comprenant une peau externe (12), destinée à être orientée vers l'extérieur de la lèvre, une peau interne (13), destinée à être orientée vers l'intérieur de la lèvre, et au moins un élément électrique chauffant (14) situé entre la peau interne et la peau externe et apte à être relié à des moyens d'alimentation électrique (15, 16), **caractérisé en ce que** le au moins un élément électrique chauffant s'étend au moins en partie à travers une zone d'atténuation acoustique présentant des perforations (11) traversant la structure et associées acoustiquement à une structure d'atténuation acoustique (30) rapportée sur la peau interne au niveau de ladite zone d'atténuation acoustique.

2. Structure (7) selon la revendication 1, **caractérisée en ce qu'**elle comprend au moins une couche de protection (17, 18) englobant l'élément électrique chauffant (14).

3. Structure (7) selon la revendication 2, **caractérisée en ce qu'**au moins une couche de protection est une couche d'une résine (17).

4. Structure (7) selon l'une quelconque des revendications 2 ou 3, **caractérisée en ce qu'**au moins une couche de protection est un pli de verre (18).

5. Structure (7) selon l'une quelconque des revendications 1 à 4, **caractérisée en ce qu'**elle comprend au moins deux couches d'au moins un élément électrique chauffant (14), éventuellement séparées par au moins une couche métallique ou organique.

6. Structure (7) selon l'une quelconque des revendications 1 à 5, **caractérisée en ce qu'**elle comprend un feuillard réflectorisant disposé après l'élément électrique chauffant (14) et avant la peau interne (13).

7. Structure (7) selon l'une quelconque des revendications 1 à 6, **caractérisé en ce que** la peau externe (13) possède une épaisseur inférieure à 1 mm.

8. Structure (7) selon l'une quelconque des revendications 1 à 7, **caractérisée en ce que** l'élément électrique chauffant (14) se présente sous la forme d'une bande métallique formant une résistance chauffante.

9. Structure (7) selon l'une quelconque des revendications 1 à 7, **caractérisée en ce que** l'élément électrique chauffant (14) se présente sous la forme d'un tissu, notamment organique ou métallique, formant une résistance chauffante.

10. Structure (7) selon l'une quelconque des revendications 8 ou 9, **caractérisée en ce que** l'élément électrique chauffant (14) se présente sous la forme d'un serpentin.

11. Lèvre (4a) d'une entrée d'air (4) pour nacelle (1) de turboréacteur, **caractérisée en ce qu'**elle est réalisée à partir d'une ou plusieurs structures (7) selon l'une quelconque des revendications 1 à 10.

12. Nacelle (1) de turboréacteur comprenant une entrée d'air (4), **caractérisée en ce que** l'entrée d'air est équipée d'une lèvre (4a) selon la revendication 11.

## Patentansprüche

1. Struktur (7) für eine Lippe (4a) eines Lufteinlasses (4) einer Gondel (1) eines Turbotriebwerks, die eine äußere Haut (12), die dazu bestimmt ist, nach außerhalb der Lippe zu zeigen, eine innere Haut (13), die dazu bestimmt ist, nach innerhalb der Lippe zu zeigen, und mindestens ein elektrisches Heizelement (14), das sich zwischen der inneren Haut und der äußeren Haut befindet und imstande ist, mit elektrischen Versorgungsmitteln (15, 16) verbunden zu sein, umfasst, **dadurch gekennzeichnet, dass** sich mindestens ein elektrisches Heizelement mindestens teilweise durch eine akustische Dämpfungszone erstreckt, die Perforationen (11) aufweist, die die Struktur durchqueren und akustisch einer akustischen Dämpfungsstruktur (30) zugeordnet sind, die auf Ebene der akustischen Dämpfungszone auf der inneren Haut aufgesetzt ist.

2. Struktur (7) nach Anspruch 1, **dadurch gekennzeichnet, dass** sie mindestens eine Schutzschicht (17, 18) umfasst, die das elektrische Heizelement (14) einschließt.

3. Struktur (7) nach Anspruch 2, **dadurch gekennzeichnet, dass** mindestens eine Schutzschicht eine Schicht eines Harzes (17) ist.

4. Struktur (7) nach einem der Ansprüche 2 oder 3, **dadurch gekennzeichnet, dass** mindestens eine Schutzschicht eine Glasfalte (18) ist.

5. Struktur (7) nach einem der Ansprüche 1 bis 4, **dadurch gekennzeichnet, dass** sie mindestens zwei Schichten mindestens eines elektrischen Heizelements (14) umfasst, die eventuell durch mindestens eine Metall- oder organische Schicht getrennt sind.

6. Struktur (7) nach einem der Ansprüche 1 bis 5, **dadurch gekennzeichnet, dass** sie ein reflektierendes Band umfasst, das nach dem elektrischen Heizelement (14) und vor der inneren Haut (13) angeordnet ist.

7. Struktur (7) nach einem der Ansprüche 1 bis 6, **dadurch gekennzeichnet, dass** die äußere Haut (13) eine Dicke unter 1 mm besitzt.

8. Struktur (7) nach einem der Ansprüche 1 bis 7, **dadurch gekennzeichnet, dass** sich das elektrische Heizelement (14) in Form eines Metallbands darstellt, das einen Heizwiderstand bildet.

9. Struktur (7) nach einem der Ansprüche 1 bis 7, **dadurch gekennzeichnet, dass** sich das elektrische Heizelement (14) in Form eines insbesondere organischen oder metallischen Gewebes darstellt, das einen Heizwiderstand bildet.

10. Struktur (7) nach einem der Ansprüche 8 oder 9, **dadurch gekennzeichnet, dass** sich das elektrische Heizelement (14) in Form einer Schlange darstellt.

11. Lippe (4a) eines Lufteinlasses (4) für eine Gondel (1) eines Turbotriebwerks, **dadurch gekennzeichnet, dass** sie aus einer oder mehreren Strukturen (7) nach einem der Ansprüche 1 bis 10 hergestellt ist.

12. Gondel (1) eines Turbotriebwerks, die einen Lufteinlass (4) umfasst, **dadurch gekennzeichnet, dass** der Lufteinlass mit einer Lippe (4a) nach Anspruch 11 ausgestattet ist.

## Claims

1. A structure (7) for a lip (4a) of an air intake (4) of a jet engine nacelle (1) comprising an outer skin (12), intended to be oriented toward the outside of the lip, an inner skin (13), intended to be oriented toward the inside of the lip, and at least one electric heating element (14) situated between the inner skin and the outer skin and able to be connected to electrical supply means (15, 16), **characterized in that** the at least one electric heating element extends at least partially through a noise attenuation area having perforations (11) passing through the structure and acoustically associated with a noise attenuation structure (30) attached on the inner skin at said noise attenuation area.

2. The structure (7) according to claim 1, **characterized in that** it comprises at least one protective layer (17, 18) encompassing the electric heating element (14).

3. The structure (7) according to claim 2, **characterized in that** at least one protective layer is a layer of resin (17).

4. The structure (7) according to any one of claims 2 or 3, **characterized in that** at least one protective layer is a glass ply (18).

5. The structure (7) according to any one of claims 1 to 4, **characterized in that** it comprises at least two layers of at least one electric heating element (14), optionally separated by at least one metal or organic layer.

6. The structure (7) according to any one of claims 1 to 5, **characterized in that** it comprises a reflective sheet positioned after the electric heating element (14) and before the inner skin (13).

7. The structure (7) according to any one of claims 1 to 6, **characterized in that** the outer skin (13) has a thickness smaller than 1 mm.

8. The structure (7) according to any one of claims 1 to 7, **characterized in that** the electric heating element (14) assumes the form of a metal strip forming a heating resistance.

9. The structure (7) according to any one of claims 1 to 7, **characterized in that** the electric heating element (14) assumes the form of a fabric, in particular organic or metallic, forming a heating resistance.

10. The structure (7) according to any one of claims 8 or 9, **characterized in that** the electric heating element (14) assumes a serpentine form.

11. An air intake (4) lip (4a) for a jet engine nacelle (1), **characterized in that** it is made from one or more structures (7) according to any one of claims 1 to 10.

12. A jet engine nacelle (1) comprising an air intake (4), **characterized in that** the air intake is equipped with a lip (4a) according to claim 11.
